# EUROPEAN PATENT APPLICATION

(11) **EP 4 825 941 A1**
(43) Date of publication of application: **21.10.2026**
(21) Application number: 24904298.7
(22) Date of filing: 16.12.2024
(51) Int. Cl.: C09K 5/10, C23C 2/28, C23C 2/06, C23C 2/20, C23C 2/00

(54) **COOLING COMPOSITION FOR ZINC ALLOY PLATED STEEL SHEET, METHOD FOR MANUFACTURING ZINC ALLOY PLATED STEEL SHEET USING SAME, AND ZINC ALLOY PLATED STEEL SHEET PRODUCED BY SAME**

(30) Priority: 14.12.2023 KR 20230181968
(71) Applicant: POSCO Co., Ltd, Gyeongsangbuk-do 37859 (KR)
(72) Inventor: JO, Du-Hwan, Pohang-si, Gyeongsangbuk-do 37877 (KR); YOO, Bong-Hwan, Gwangyang-si, Jeollanam-do 57807 (KR); KIM, Sung-Joo, Pohang-si, Gyeongsangbuk-do 37877 (KR)
(74) Representative: Meissner Bolte Partnerschaft mbB
(86) International application number: PCT/KR2024/020349
(87) International publication number: WO 2025/127733

(57) **Abstract**

One aspect of the present invention provides a method for manufacturing a zinc alloy plated steel sheet. The method comprises the steps of: preparing a base steel sheet; plating the base steel sheet by dipping same in a Zn-based plating bath comprising Al and Mg; adjusting the plating adhesion amount of the base steel sheet; and spraying droplets of a cooling composition onto the steel sheet having the plating adhesion amount adjusted, thereby cooling the steel sheet, wherein the cooling composition may comprise 0.1 to 10.0 wt% of urea and the balance of water.

## Description

### Technical Field

The present disclosure relates to a cooling composition for a zinc alloy-coated steel sheet, a method for manufacturing a zinc alloy-coated steel sheet using the same, and a zinc alloy-coated steel sheet manufactured thereby.

### Background Art

Generally, a zinc alloy-coated steel sheet is manufactured by immersing a high-temperature steel sheet that has passed through an annealing furnace into a molten zinc plating bath, and then solidifying the molten zinc applied to the steel sheet. At this time, spangles, which are dendritic crystal grains, are formed on the surface of the steel sheet as the molten zinc cools.

Specifically, in the initial stage of solidification of molten zinc, dendrites grow very rapidly due to solidification nuclei, forming a coarse spangle pattern. That is, the size of the spangles can be determined in the initial stage of solidification.

To minimize the formation of such spangles, a ternary Zn-Al-Mg based zinc-coated steel sheet has been developed, which is manufactured by immersing a steel sheet in a molten zinc plating bath containing Al and Mg. This ternary zinc-coated steel sheet has the advantage that the formation of spangles can be prevented because it contains aluminum and magnesium, which have high melting points.

However, when manufacturing a ternary zinc-coated steel sheet, there is a disadvantage that the cooling section (ΔT > 70°C) of the liquid and solid phases of the coating layer applied to the steel sheet is much wider than the cooling section (ΔT ≈ 30°C) of pure zinc. As a result, an irregular excess coating part is formed on the surface of the steel sheet where solidification has not been completely performed, and a problem of dot-shaped defects occurs due to pressing when passing through subsequent rolls (Pass line). Accordingly, the quality of the surface appearance of the ternary zinc-coated steel sheet is degraded, and over time, the dot-shaped defects are oxidized and turn black, which also leads to a problem of an increased defect rate.

To solve these problems and improve the surface quality, a method of quenching the ternary zinc-coated steel sheet at an early stage has been developed. For example, conventionally, a method of spraying water or a phosphate aqueous solution onto the steel sheet before the pure zinc coating solidifies has been used.

However, with this method, not only is the cooling effect insufficient, but there is also a problem in that the phosphate component remains on the surface of the coating layer, causing side effects that degrade the coating quality in subsequent processes.

Therefore, when manufacturing a ternary zinc-coated steel sheet, there is a need for a method that improves the surface appearance and quality without defects on the surface while quenching the molten coating layer.

(Patent Document 1) Korean Patent Laid-Open Publication No. 10-2010-0076817

### Disclosure of Invention

### Technical Problem

An aspect of the present disclosure is to provide a cooling composition for minimizing the occurrence of surface defects on a zinc alloy-coated steel sheet.

Another aspect of the present disclosure is to provide a method for manufacturing a zinc alloy-coated steel sheet by quenching a molten coating layer applied to the surface of a base steel sheet using the cooling composition.

Still another aspect of the present disclosure is to provide a zinc alloy-coated steel sheet having excellent physical properties such as surface appearance and quality, and coating adhesion.

The problems of the present disclosure are not limited to the matters mentioned above. Additional problems of the present disclosure are described in the overall content of the specification, and those skilled in the art to which the present disclosure pertains will be able to understand the additional problems of the present disclosure from the contents described in the specification of the present disclosure without any difficulty.

### Solution to Problem

An aspect of the present disclosure provides a cooling composition for a zinc alloy-coated steel sheet. The composition may comprise 0.1 to 10.0% by weight of urea; and the balance of water.

In addition, in the aforementioned composition, the cooling composition may further comprise 0.1 to 10.0% by weight of alcohol.

In addition, in one of the aforementioned compositions, the alcohol may comprise one or more selected from the group consisting of ethanol, propanol, isopropanol, butanol, and isobutanol.

Another aspect of the present disclosure provides a method for manufacturing a zinc alloy-coated steel sheet. The method comprises: preparing a base steel sheet; dipping the base steel sheet into a Zn-based plating bath containing Al and Mg to perform plating; adjusting a coating weight of the base steel sheet; and cooling the steel sheet, on which the coating weight has been adjusted, by spraying a cooling composition in droplets, wherein the cooling composition may comprise 0.1 to 10.0% by weight of urea; and the balance of water.

In addition, in one of the aforementioned methods, the cooling composition may further comprise 0.1 to 10.0% by weight of alcohol.

In addition, in one of the aforementioned methods, the alcohol may include one or more selected from the group consisting of ethanol, propanol, isopropanol, butanol, and isobutanol.

In addition, in one of the aforementioned methods, in the cooling step, air may be sprayed onto the steel sheet at a pressure of 1.0 to 5.0 kgf/cm².

In addition, in one of the aforementioned methods, in the cooling step, the cooling composition may be sprayed at a pressure of 0.5 to 2.5 kgf/cm².

In addition, in one of the aforementioned methods, a spray pressure ratio of the cooling composition and the air may be 1:0.3 to 0.9.

In addition, in one of the aforementioned methods, in the cooling step, the cooling composition may be sprayed onto the steel sheet after passing through a charging electrode.

In addition, in one of the aforementioned methods, a voltage of -5 to -50 kV may be applied to the cooling composition at the charging electrode.

In addition, in one of the aforementioned methods, in the cooling step, a temperature of the steel sheet may be 350 to 460°C.

In addition, in one of the aforementioned methods, a temperature of the plating bath may be 430 to 500°C.

Another aspect of the present disclosure provides a zinc alloy-coated steel sheet. The zinc alloy-coated steel sheet may be manufactured according to one of the aforementioned methods.

### Advantageous Effects of Invention

According to the present disclosure, by spraying a cooling composition including urea onto the surface of a steel sheet, a solidification rate of a molten coating layer can be increased and solidification of the steel sheet surface can be promoted.

In addition, according to the present disclosure, by quenching the coating layer, defects such as the formation of dot-shaped patterns on the zinc alloy-coated steel sheet are minimized, and the surface appearance of the steel sheet can be made beautiful.

In addition, according to the present disclosure, by spraying the cooling composition charged with a high voltage onto the surface of the steel sheet as ultrafine droplets, a larger amount of fine droplets can be attached to the surface of the steel sheet.

The diverse and beneficial advantages and effects of the present disclosure are not limited to the contents described above, and will be more easily understood in the process of describing specific embodiments of the present disclosure.

### Brief Description of Drawings

A brief description of each drawing is provided to more fully understand the drawings cited in the detailed description of the present disclosure.
FIG. 1 is a photograph showing the results of EPMA surface analysis for Inventive Example 10, Inventive Example 16, and Comparative Example 7.
FIG. 2 is a graph showing the results of performing a profile on the surface temperature for Inventive Example 4, Inventive Example 10, Inventive Example 16, Comparative Example 1, Comparative Example 4, and Comparative Example 7.
FIG. 3 is a graph showing the results of performing a profile on the surface temperature for Inventive Examples 10 to 12.

### Best Mode for the Invention

Hereinafter, preferred embodiments of the present disclosure will be described. However, the embodiments of the present disclosure may be modified into various other forms, and the terms used in this specification are for describing the present disclosure and are not intended to limit the present disclosure. In addition, the singular forms used in this specification include the plural forms unless the context clearly dictates otherwise.

In this specification, the term "comprising" is used to indicate that it does not exclude other components but may further include other components, unless there is a specific statement to the contrary.

In addition, unless otherwise specified in the specification of the present disclosure, the % unit means % by weight.

Unless defined otherwise, all terms, including technical and scientific terms, used in this specification have the same meaning as commonly understood by one of ordinary skill in the art to which this disclosure belongs. Pre-defined terms are interpreted to have meanings consistent with the related technical literature and the currently disclosed content.

Hereinafter, a cooling composition for a zinc alloy-coated steel sheet according to an embodiment of the present disclosure will be described. The cooling composition is sprayed in droplets onto a molten coating layer of a zinc alloy-coated steel sheet to act as a solidification nucleus, thereby minimizing the occurrence of surface defects by increasing the solidification rate of the coating layer.

The cooling composition according to an embodiment of the present disclosure may include urea.

Conventionally, a method of spraying a phosphate aqueous solution onto the surface of a steel sheet has been used to promote the generation of solidification nuclei on the surface of the steel sheet. However, when a phosphate aqueous solution is used, there is a problem in that the dried powder contaminates surrounding equipment, and the phosphate remains as a glassy film on the surface of the steel sheet, which causes a secondary deterioration of physical properties. The cooling composition according to an embodiment of the present disclosure includes urea, and by spraying this cooling composition onto the surface of a steel sheet, the cooling rate of the molten coating layer can be increased. In addition, after the coating layer is dried, no residue is formed on the surface of the steel sheet, which is a feature that solves the above-mentioned problems.

Urea may be included in an amount of 0.1 to 10.0% by weight based on the total weight of the cooling composition. If the content of the urea is less than 0.1% by weight, the above-mentioned effect (i.e., improvement of the cooling rate of the steel sheet through the formation of solidification nuclei) cannot be sufficiently obtained. In addition, if the content of the urea exceeds 10.0% by weight, it becomes a factor in increasing the manufacturing cost, or the urea is dried and powdered, so the surrounding equipment may be contaminated. That is, the content of the urea may be 0.1 to 10.0% by weight, more specifically 0.3 to 7.0% by weight, and even more specifically 0.5 to 5.0% by weight.

As an example, the cooling composition may further include alcohol. When the cooling composition is sprayed in droplets onto the molten coating layer, the alcohol reduces the surface tension of the cooling composition, thereby further atomizing the droplets, and as a result, a larger amount of solidification nuclei is formed, and the coating layer can be cooled and solidified more quickly.

The alcohol may include one or more selected from the group consisting of ethanol, propanol, isopropanol, butanol, and isobutanol. However, the present disclosure is not limited thereto, and various types of alcohols commonly used in the industry may be used.

The alcohol may be included in an amount of 0.1 to 10.0% by weight based on the total weight of the cooling composition. If the content of the alcohol is less than 0.1% by weight, sufficient atomization of the droplets may not be achieved. In addition, if the content of the alcohol exceeds 10.0% by weight, it becomes a factor in increasing the manufacturing cost, or there is a problem of odor generation due to volatility. That is, the content of the alcohol may be 0.1 to 10.0% by weight, more specifically 0.3 to 7.0% by weight, and even more specifically 0.5 to 5.0% by weight.

Hereinafter, a method for manufacturing a zinc alloy-coated steel sheet according to an embodiment of the present disclosure will be described. The method for manufacturing a zinc alloy-coated steel sheet according to an embodiment of the present disclosure may include a step of preparing a base steel sheet; a step of plating the base steel sheet; a step of adjusting a coating weight; and a step of cooling the steel sheet.

Hereinafter, each step will be described in detail.

### [Preparation of Base Steel Sheet]

A base steel sheet, which is a base of a zinc alloy-coated steel sheet, can be prepared. The type of steel sheet, alloy composition, etc. of the base steel sheet are not particularly limited, and a steel sheet commonly used for metal plating in the technical field can be used. For example, a hot-rolled steel sheet, a hot-rolled pickled steel sheet, or a cold-rolled steel sheet can be used as the base steel sheet. In addition, for example, carbon steel, aluminum, aluminum alloy steel, stainless steel, or copper can be used as the base steel sheet.

### [Plating on Base Steel Sheet]

The base steel sheet prepared in the previous step can be plated. Specifically, the plating step can be performed by immersing the base steel sheet in a Zn-based plating bath. By forming a coating layer on the surface of the base steel sheet through the plating step, the corrosion resistance of the steel sheet can be improved.

The Zn-based plating bath may contain Al and Mg. Since Al and Mg have high melting points, the molten coating layer on the surface of the steel sheet can be rapidly cooled, thereby minimizing surface defects and improving the surface appearance and quality.

As an example, Al may be included in an amount of 0.1 to 30% by weight based on the total weight of the plating bath. If the content of Al is less than 0.1% by weight, the aforementioned effect cannot be sufficiently obtained, or there is a problem in that it is difficult to secure high corrosion resistance. In addition, if the content of Al exceeds 30% by weight, the temperature of the plating bath becomes excessively high and the workability is degraded. That is, the content of Al may be 0.1 to 30% by weight, specifically 0.1 to 30.0% by weight, more specifically 0.5 to 20.0% by weight, and even more specifically 1.0 to 15.0% by weight.

As an example, Mg may be included in an amount of 0.1 to 30% by weight based on the total weight of the plating bath. If the content of Mg is less than 0.1% by weight, the aforementioned effect cannot be sufficiently obtained, or there is a problem in that it is difficult to secure high corrosion resistance. In addition, if the content of Mg exceeds 30% by weight, dross may be formed on the surface of the plating bath. That is, the content of Mg may be 0.1 to 30% by weight, specifically 0.1 to 30.0% by weight, more specifically 0.5 to 20.0% by weight, and even more specifically 1.0 to 15.0% by weight.

The plating bath may include the balance of Zn and other unavoidable impurities in addition to the above-described composition. For example, since unavoidable impurities (e.g., iron (Fe)) from raw materials or the surrounding environment may be inevitably mixed in the plating bath during a normal manufacturing process, they cannot be excluded.

As an example, the temperature of the plating bath may be 430 to 500°C. If the temperature of the plating bath is less than 430°C, the fluidity of the plating bath may be lowered, or dross may be excessively formed on the surface of the plating bath. In addition, if the temperature of the plating bath exceeds 500°C, the energy cost may be excessively increased due to excessive electricity use, and the temperature of the steel sheet may be increased, thereby reducing the cooling efficiency in a subsequent process. That is, the temperature of the plating bath may be 430 to 500°C, more specifically 440 to 480°C, and even more specifically 450 to 470°C. However, the present disclosure is not limited thereto, and the temperature of the plating bath may be adjusted depending on the type, ratio, etc. of the alloying elements constituting the base steel sheet and/or the plating bath.

### [Coating Weight Adjustment]

The coating weight of the base steel sheet on which plating has been performed in the previous step can be adjusted. By removing the excess coating metal attached to the surface of the base steel sheet, the coating weight can be adjusted to an appropriate level, thereby securing performance such as corrosion resistance and coating adhesion.

As an example, the coating weight adjustment can be performed by wiping the surface of the base steel sheet. Specifically, air wiping can be performed using air or gas. For example, argon (Ar) gas, nitrogen (N2) gas, or a mixed gas of argon and nitrogen can be used as the gas, but the present disclosure is not limited thereto, and a gas commonly used for coating weight adjustment in the technical field can be used.

As an example, the coating weight can be adjusted to 20 to 1000 g/m² for one side of the steel sheet. If the coating weight is less than 20 g/m², there may be a problem in that precise control is difficult, and it is difficult to secure sufficient corrosion resistance. In addition, if the coating weight exceeds 1000 g/m², defects in the surface appearance may occur. That is, the coating weight may be 20 to 1000 g/m², more specifically 50 to 600 g/m², and even more specifically 60 to 500 g/m². However, the present disclosure is not limited thereto, and the coating weight may be appropriately adjusted depending on the intended use of the steel sheet.

### [Cooling of Steel Sheet]

In the previous step, the steel sheet, on which the coating weight has been adjusted, can be cooled by spraying a cooling composition in droplets. Specifically, by spraying the cooling composition including urea onto the surface of the steel sheet in droplets, the cooling composition acts as a solidification nucleus, thereby increasing the solidification rate of the molten coating layer.

When the cooling composition including urea is sprayed onto the surface of the steel sheet, the decomposition reaction of urea, which is represented by the following Reaction Formula 1, and the evaporation of water, which is represented by the following Reaction Formula 2, may occur. Generally, the cooling section of the molten Zn-Al-Mg-based coating layer is wide, but the latent heat of the steel sheet is taken away by the endothermic reaction, and the cooling composition sprayed in droplets temporarily remains on the surface to act as a solidification nucleus, so that the coating layer solidifies around the solidification nucleus, and the cooling rate can be increased.

[Reaction Formula 1] (NH₂)₂CO + H₂O → 2NH₃ + CO₂ ΔH°(heat of reaction) = 185.5 kJ/mol

[Reaction Formula 2] H₂O(l) → H₂O(g) ΔH°(heat of vaporization) = 43.1 kJ/mol

Urea may be included in an amount of 0.1 to 10.0% by weight based on the total weight of the cooling composition. If the content of the urea is less than 0.1% by weight, the above-mentioned effect (i.e., improvement of the cooling rate of the steel sheet through the formation of solidification nuclei) cannot be sufficiently obtained. In addition, if the content of the urea exceeds 10.0% by weight, it becomes a factor in increasing the manufacturing cost, or the urea is dried and powdered, so the surrounding equipment may be contaminated. That is, the content of the urea may be 0.1 to 10.0% by weight, more specifically 0.3 to 7.0% by weight, and even more specifically 0.5 to 5.0% by weight.

As an example, the cooling composition may further include alcohol. In this case, the evaporation of alcohol (e.g., ethanol, etc.), which is represented by the following Reaction Formula 3, occurs, taking away the latent heat of the steel sheet and increasing the cooling rate. In addition, the alcohol reduces the surface tension of the cooling composition, thereby further atomizing the droplets, and as a result, a larger amount of solidification nuclei is formed, and the coating layer can be cooled and solidified more quickly.

[Reaction Formula 3] C₂H₅OH(l) → C₂H₅OH(g) ΔH°(heat of evaporation) = 39.3 kJ/mol

The alcohol may include one or more selected from the group consisting of ethanol, propanol, isopropanol, butanol, and iso-butanol. However, the present disclosure is not limited thereto, and various types of alcohols commonly used in the industry may be used.

The alcohol may be included in an amount of 0.1 to 10.0% by weight based on the total weight of the cooling composition. If the content of the alcohol is less than 0.1% by weight, sufficient atomization of the droplets may not be achieved. In addition, if the content of the alcohol exceeds 10.0% by weight, it becomes a factor in increasing the manufacturing cost, or there is a problem of odor generation due to volatility. That is, the content of the alcohol may be 0.1 to 10.0% by weight, more specifically 0.3 to 7.0% by weight, and even more specifically 0.5 to 5.0% by weight.

As an example, in the cooling step, the cooling composition may be sprayed onto the steel sheet after passing through a charging electrode. In this case, since the cooling composition passes through the charging electrode and becomes charged, it can be attached to the surface of the steel sheet by an electrical attraction. If the size of the sprayed droplets is excessively large, a pitting phenomenon may occur due to the collision of the droplets with the molten coating layer. In the present disclosure, by spraying the charged cooling composition, the droplets are sprayed in a smaller size than when the cooling composition is not charged, so that a larger number of droplets can be sprayed onto the surface of the steel sheet based on the same volume of spray. Therefore, the pitting phenomenon can be prevented, and the attachment efficiency can be increased by attaching a larger amount of droplets to the steel sheet per unit area.

A high voltage can be applied to the cooling composition using a mesh-type charging electrode. In this case, since the electric field formed by the charging electrode is uniform, the effect of the high voltage can be more excellent. Specifically, when the cooling composition passes through the mesh-type high-voltage charging electrode, an electrostatic atomization phenomenon occurs, in which large droplets are divided into small droplets, so that the average size of the droplets decreases and the number of droplets can be increased.

A voltage of -5 to -50 kV may be applied to the cooling composition at the charging electrode. If the voltage is less than -5 kV, the droplet atomization effect may not be sufficient. In addition, if the voltage exceeds -50 kV, an electric spark may occur between the charging electrode and the steel sheet. That is, the voltage may be -5 to -50 kV, more specifically -10 to -40 kV, and even more specifically -10 to -30 kV.

In the cooling step, air may be sprayed together with the cooling composition onto the steel sheet. Specifically, by spraying air together with the cooling composition onto the steel sheet at a high pressure, the droplets of the cooling composition can be more efficiently attached to the surface of the steel sheet.

As an example, the cooling composition and air can be sprayed at a high pressure using a two-fluid spray nozzle. For example, air can be sprayed at a pressure of 1.0 to 5.0 kgf/cm². If the spray pressure of air is less than 1.0 kgf/cm², the atomization efficiency of the composition droplets and the attachment efficiency of the droplets to the steel sheet may be lowered. In addition, if the spray pressure of air exceeds 5.0 kgf/cm², the kinetic energy of the droplets becomes very large, and a pitting phenomenon may occur on the surface of the coating layer due to the droplets, thereby damaging the surface appearance. That is, the spray pressure of air may be 1.0 to 5.0 kgf/cm², more specifically 1.2 to 4.0 kgf/cm², and even more specifically 1.4 to 3.0 kgf/cm².

The cooling composition can be sprayed at a pressure of 0.5 to 2.5 kgf/cm². If the spray pressure of the cooling composition is less than 0.5 kgf/cm², sufficient atomization of the droplets may not be achieved. In addition, if the spray pressure of the cooling composition exceeds 2.5 kgf/cm², a pitting phenomenon may occur due to the collision of the droplets with the coating layer. That is, the spray pressure of the cooling composition may be 0.5 to 2.5 kgf/cm², more specifically 0.6 to 2.0 kgf/cm², and even more specifically 0.7 to 1.5 kgf/cm².

As an example, a spray pressure ratio of the cooling composition and air may be 1:0.3 to 0.9. If the spray pressure ratio of the cooling composition and air is less than 1:0.3, the aqueous solution droplets may not be properly attached to the surface of the steel sheet. In addition, if the spray pressure ratio of the cooling composition and air exceeds 1:0.9, the size of the droplets may be too large, and a pitting phenomenon may occur on the surface of the coating layer. That is, the spray pressure ratio of the cooling composition and air may be 1:0.3 to 0.9, more specifically 1:0.4 to 0.8, and even more specifically 1:0.5 to 0.7.

In the cooling step, the temperature of the steel sheet may be 350 to 460°C. If the temperature of the steel sheet is less than 350°C, it is difficult for the aqueous solution droplets to perform their function as solidification nuclei, and the cooling rate may not be sufficiently increased. In addition, if the temperature of the steel sheet exceeds 460°C, a limitation may occur in the manufacturing process and equipment structure. That is, the temperature of the steel sheet may be 350 to 460°C, more specifically 370 to 450°C, and even more specifically 380 to 440°C.

As an example, an additional cooling process may be further performed on the cooled steel sheet in the previous step. That is, after the step of first cooling the steel sheet by spraying the cooling composition, a second cooling of the first cooled steel sheet may be performed. At this time, the method of the second cooling is not particularly limited, and various types of methods commonly used in the technical field may be used.

Hereinafter, a zinc alloy-coated steel sheet according to an embodiment of the present disclosure will be described. The zinc alloy-coated steel sheet according to an embodiment of the present disclosure may be one manufactured by the aforementioned manufacturing method.

When manufacturing a zinc alloy-coated steel sheet, by spraying a cooling composition including urea onto the surface of a molten coating layer in droplets, the cooling rate of the coating layer can be increased. Accordingly, the solidification of the surface of the steel sheet is promoted, so that defects such as the formation of dot-shaped patterns are minimized, and the surface appearance of the steel sheet can be made beautiful.

Conventionally, a method of spraying a phosphate aqueous solution onto the surface of a steel sheet has been used to promote the generation of solidification nuclei on the surface of the steel sheet. However, when a phosphate aqueous solution is used, there is a problem in that the dried powder contaminates surrounding equipment, and the phosphate remains as a glassy film on the surface of the steel sheet, which causes a secondary deterioration of physical properties. In particular, the glassy phosphate remaining on the surface of the steel sheet deteriorates the coating adhesion during painting and causes low-temperature joint brittleness.

In the present disclosure, by spraying a cooling composition including urea onto the surface of a steel sheet, the cooling rate of a molten coating layer is increased, and no residue is formed on the surface of the steel sheet even after drying, which is a feature that solves the above-mentioned problems. The zinc alloy-coated steel sheet having such excellent physical properties (i.e., surface appearance and quality, coating adhesion, low-temperature joint brittleness, etc.) can be used as a material for interior and exterior plates and coated steel sheets for automobiles, home appliances, and building materials.

### Mode for the Invention

### (Examples)

Hereinafter, the present disclosure will be described in more detail through examples. However, it should be noted that the following examples are for illustrating the present disclosure in more detail and are not intended to limit the scope of rights of the present disclosure. This is because the scope of rights of the present disclosure is determined by the matters described in the claims and matters reasonably inferred therefrom.

### (1) Manufacture of Inventive Examples

A hot-rolled steel sheet coil (C: 0.0013%, Mn: 0.091%, P: 0.0092%, S: 0.005%, the balance: Fe and unavoidable impurities) having a thickness of 2.0 mm was immersed in a plating bath having the composition of Table 1 below at a moving speed of 60 m/min, and air-wiped to be plated to 140 g/m² per side of the steel sheet. A zinc alloy-coated steel sheet was manufactured by spraying a cooling composition containing urea [(NH₂)₂CO] and/or ethanol onto the surface of the steel sheet for 3 seconds with a two-fluid spray nozzle together with air under the conditions of Table 1 below, and cooling the steel sheet.

At this time, a mesh-type high-voltage charging electrode was placed between the two-fluid spray nozzle and the steel sheet so that the cooling composition passing through the nozzle passed through the charging electrode (voltage: -30 kV). The spray pressure of the cooling composition was 0.9 kgf/cm², the spray pressure of air was 1.5 kgf/cm², and the ratio of the spray pressure of the cooling composition and air was equally applied as 1:0.6. In addition, the temperature of the steel sheet at the time of spraying the cooling composition was adjusted under the conditions of Table 1 below.

**[Table 1]**

| Category | Urea (wt%) | Ethanol (wt%) | Electro static Spraying | Plating Composition (Zn-xAl-yMg) | Material Thickness (mm) | Plating Bath Temp. (°C) | Steel Sheet Temp. at Spraying (°C) |
|---|---|---|---|---|---|---|---|
| Inv. Ex.1 | 1 | 1 | ○ | x=1.5±0.5wt%, y=2.0±0.5wt% | 2.0 | 460±5 | 440 |
| Inv. Ex.2 | 1 | 1 | ○ | | | | 420 |
| Inv. Ex.3 | 1 | 1 | ○ | | | | 400 |
| Inv. Ex.4 | 1 | 3 | ○ | | | | 440 |
| Inv. Ex.5 | 1 | 3 | ○ | | | | 420 |
| Inv. Ex.6 | 1 | 3 | ○ | | | | 400 |
| Inv. Ex.7 | 3 | 1 | ○ | | | | 440 |
| Inv. Ex.8 | 3 | 1 | ○ | | | | 420 |
| Inv. Ex.9 | 3 | 1 | ○ | | | | 400 |
| Inv. Ex.10 | 3 | 3 | ○ | | | | 440 |
| Inv. Ex.11 | 3 | 3 | ○ | | | | 420 |
| Inv. Ex.12 | 3 | 3 | ○ | | | | 400 |
| Inv. Ex.13 | 5 | 1 | ○ | | | | 440 |
| Inv. Ex.14 | 5 | 1 | ○ | | | | 420 |
| Inv. Ex.15 | 5 | 1 | ○ | | | | 400 |
| Inv. Ex.16 | 5 | 3 | ○ | | | | 440 |
| Inv. Ex.17 | 5 | 3 | ○ | | | | 420 |
| Inv. Ex.18 | 5 | 3 | ○ | | | | 400 |
| Inv. Ex.19 | 1 | 0 | ○ | | | | 440 |
| Inv. Ex.20 | 3 | 0 | ○ | | | | 440 |
| Inv. Ex.21 | 5 | 0 | ○ | | | | 440 |
| Inv. Ex.22 | 1 | 1 | ○ | | | | 440 |
| Inv. Ex.23 | 1 | 1 | ○ | | | | 420 |
| Inv. Ex.24 | 1 | 1 | ○ | | | | 400 |
| Inv. Ex.25 | 1 | 3 | ○ | | | | 440 |
| Inv. Ex.26 | 1 | 3 | ○ | | | | 420 |
| Inv. Ex.27 | 1 | 3 | ○ | | | | 400 |
| Inv. Ex.28 | 3 | 1 | ○ | | | | 440 |
| Inv. Ex.29 | 3 | 1 | ○ | | | | 420 |
| Inv. Ex.30 | 3 | 1 | ○ | x=12±3wt%, y=5.0±2wt% | 2.0 | 460±5 | 400 |
| Inv. Ex.31 | 3 | 3 | ○ | | | | 440 |
| Inv. Ex.32 | 3 | 3 | ○ | | | | 420 |
| Inv. Ex.33 | 3 | 3 | ○ | | | | 400 |
| Inv. Ex.34 | 5 | 1 | ○ | | | | 440 |
| Inv. Ex.35 | 5 | 1 | ○ | | | | 420 |
| Inv. Ex.36 | 5 | 1 | ○ | | | | 400 |
| Inv. Ex.37 | 5 | 3 | ○ | | | | 440 |
| Inv. Ex.38 | 5 | 3 | ○ | | | | 420 |
| Inv. Ex.39 | 5 | 3 | ○ | | | | 400 |
| Inv. Ex.40 | 1 | 0 | ○ | | | | 440 |
| Inv. Ex.41 | 3 | 0 | ○ | | | | 440 |
| Inv. Ex.42 | 5 | 0 | ○ | | | | 440 |

### (2) Manufacture of Comparative Examples

Comparative Examples were manufactured in the same manner as in the manufacturing method of the Inventive Examples, except for the sprayed substance. Specifically, in Comparative Examples 1 to 3 and Comparative Examples 10 to 12, only air was sprayed without a cooling composition; in Comparative Examples 4 to 6 and Comparative Examples 13 to 15, pure water was sprayed instead of the cooling composition; and in Comparative Examples 7 to 9 and Comparative Examples 16 to 18, a phosphate aqueous solution was sprayed instead of the cooling composition.

**[Table 2]**

| Category | Sprayed Substance | Electros tatic Spraying | Plating Composition (Zn-xAl-yMg) | Materi al Thickn ess (mm) | Plating Bath Temp. (°C) | Steel Sheet Temp. at Spraying (°C) |
|---|---|---|---|---|---|---|
| Comp. Ex. 1 | Air | X | x=1.5±0.5wt%, y=2.0±0.5wt% | 2.0 | 460±5 | 440 |
| Comp. Ex. 2 | Air | X | | | | 420 |
| Comp. Ex. 3 | Air | X | | | | 400 |
| Comp. Ex. 4 | Air + H₂O | ○ | | | | 440 |
| Comp. Ex. 5 | Air + H₂O | ○ | | | | 420 |
| Comp. Ex. 6 | Air + H₂O | ○ | | | | 400 |
| Comp. Ex. 7 | Air + Phosphate aqueous solution (conc.: 0.5%) | ○ | | | | 440 |
| Comp. Ex. 8 | Air + Phosphate aqueous solution (conc.: 0.5%) | ○ | | | | 420 |
| Comp. Ex. 9 | Air + Phosphate aqueous solution (conc.: 0.5%) | ○ | | | | 400 |
| Comp. Ex. 10 | Air | X | x=12±3wt%, y=5.0±2wt% | 2.0 | 460±5 | 440 |
| Comp. Ex. 11 | Air | X | | | | 420 |
| Comp. Ex. 12 | Air | X | | | | 400 |
| Comp. Ex. 13 | Air + H₂O | ○ | | | | 440 |
| Comp. Ex. 14 | Air + H₂O | ○ | | | | 420 |
| Comp. Ex. 15 | Air + H₂O | ○ | | | | 400 |
| Comp. Ex. 16 | Air + Phosphate aqueous solution (conc.: 0.5%) | ○ | | | | 440 |
| Comp. Ex. 17 | Air + Phosphate aqueous solution (conc.: 0.5%) | ○ | | | | 420 |
| Comp. Ex. 18 | Air + Phosphate aqueous solution (conc.: 0.5%) | ○ | | | | 400 |

### (3) Evaluation of Physical Properties

The surface quality of the manufactured Inventive Examples and Comparative Examples was evaluated for the presence or absence of residual elements on the surface of the steel sheet, the change in the surface temperature of the steel sheet, the gloss of the steel sheet, the surface roughness of the steel sheet, the whiteness of the steel sheet, and the surface quality of the steel sheet, and the results are shown in Table 3 below.

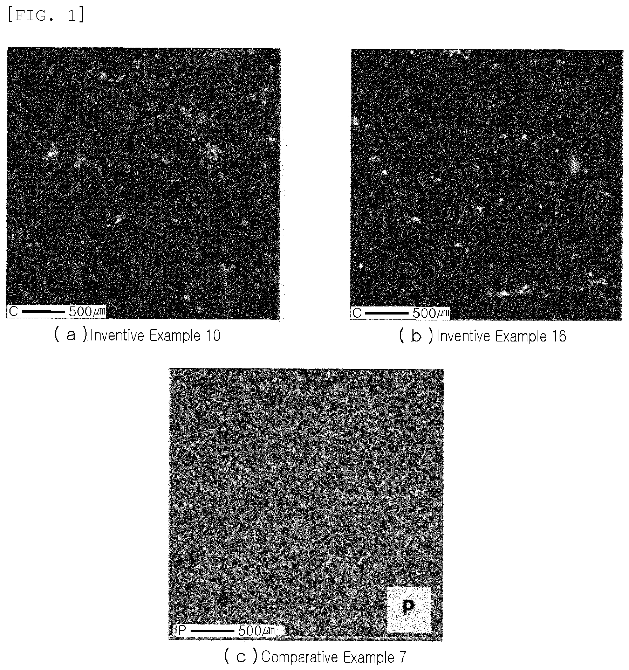

The presence or absence of residual elements on the surface of the steel sheet was evaluated by performing EPMA (Electron Probe Micro-Analysis) surface analysis. Specifically, the distribution of C, N, and O, which are constituent elements of urea, and the distribution of P, which is a constituent element of phosphoric acid, were evaluated, and the results are shown in FIG. 1. In the red-yellow-green-blue graph, a larger area of the red part indicates a higher content of residual elements, and a larger area of the blue part indicates a lower content of residual elements.

The surface temperature of the steel sheet was measured using a thermocouple (0.5 mmΦ, INC600, SENTECH ENG.). Specifically, a hole with a size of 1.0 mmΦ was drilled up to 60 mm from the center of the specimen in a steel sheet (thickness: 2.0 mm, width direction X rolling direction: 300 mm X 120 mm), and then a thermocouple was inserted to measure the temperature before and after cooling the steel sheet. At this time, in the case of Comparative Examples 1 to 3, since the cooling composition was not used, the temperature before and after cooling could not be measured.

The gloss of the steel sheet was measured at an incident angle of 60° using a portable gloss meter (TQC-Sheen, model name: SH260C).

The surface roughness of the steel sheet was measured using a 3D roughness meter (Leica, model name: DCM8).

The whiteness of the steel sheet was measured using a whiteness meter (X-RITE, USA, X-Rite Ci7860).

The surface quality of the steel sheet was evaluated by measuring the number of dot-shaped defects occurring on the surface of the steel sheet after plating, air wiping, spraying, and passing through a pass roll. Specifically, when the number of dot-shaped defects per 1 m² of the steel sheet was less than 1, it was evaluated as good (O); when the number of dot-shaped defects per 1 m² of the steel sheet was 1 or more and less than 10, it was evaluated as insufficient (Δ); and when the number of dot-shaped defects per 1 m² of the steel sheet was 10 or more, it was evaluated as poor (X).

**[Table 3]**

| Category | Presence of Residual Elements on Surface | Surface Temperature Deviation (ΔT, °C) | Surface Roughness (Ra) | Gloss | Whiteness (L) | Surface Quality |
|---|---|---|---|---|---|---|
| Inv. Ex.1 | X | 18 | 3.0±2 | 90±5 | 93±1 | ○ |
| Inv. Ex.2 | X | 16 | 3.0±2 | 90±5 | 93±1 | ○ |
| Inv. Ex.3 | X | 13 | 3.0±2 | 90±5 | 93±1 | ○ |
| Inv. Ex.4 | X | 19 | 3.0±2 | 90±5 | 93±1 | ○ |
| Inv. Ex.5 | X | 17 | 3.0±2 | 90±5 | 93±1 | ○ |
| Inv. Ex.6 | X | 13 | 3.0±2 | 90±5 | 93±1 | ○ |
| Inv. Ex.7 | X | 20 | 3.0±2 | 90±5 | 93±1 | ○ |
| Inv. Ex.8 | X | 18 | 3.0±2 | 90±5 | 93±1 | ○ |
| Inv. Ex.9 | X | 14 | 3.0±2 | 90±5 | 93±1 | ○ |
| Inv. Ex.10 | X | 20 | 3.0±2 | 90±5 | 93±1 | ○ |
| Inv. Ex.11 | X | 17 | 3.0±2 | 90±5 | 93±1 | ○ |
| Inv. Ex.12 | X | 14 | 3.0±2 | 90±5 | 93±1 | ○ |
| Inv. Ex.13 | X | 20 | 3.0±2 | 90±5 | 93±1 | ○ |
| Inv. Ex.14 | X | 18 | 3.0±2 | 90±5 | 93±1 | ○ |
| Inv. Ex.15 | X | 14 | 3.0±2 | 90±5 | 93±1 | ○ |
| Inv. Ex.16 | X | 20 | 3.0±2 | 90±5 | 93±1 | ○ |
| Inv. Ex.17 | X | 18 | 3.0±2 | 90±5 | 93±1 | ○ |
| Inv. Ex.18 | X | 14 | 3.0±2 | 90±5 | 93±1 | ○ |
| Inv. Ex.19 | X | 17 | 3.0±2 | 90±5 | 93±1 | ○ |
| Inv. Ex.20 | X | 18 | 3.0±2 | 90±5 | 93±1 | ○ |
| Inv. Ex.21 | X | 19 | 3.0±2 | 90±5 | 93±1 | ○ |
| Inv. Ex.22 | X | 18 | 3.0±2 | 90±5 | 93±1 | ○ |
| Inv. Ex.23 | X | 16 | 3.0±2 | 90±5 | 93±1 | ○ |
| Inv. Ex.24 | X | 13 | 3.0±2 | 90±5 | 93±1 | ○ |
| Inv. Ex.25 | X | 19 | 3.0±2 | 90±5 | 93±1 | ○ |
| Inv. Ex.26 | X | 17 | 3.0±2 | 90±5 | 93±1 | ○ |
| Inv. Ex.27 | X | 13 | 3.0±2 | 90±5 | 93±1 | ○ |
| Inv. Ex.28 | X | 20 | 3.0±2 | 90±5 | 93±1 | ○ |
| Inv. Ex.29 | X | 18 | 3.0±2 | 90±5 | 93±1 | ○ |
| Inv. Ex.30 | X | 14 | 3.0±2 | 90±5 | 93±1 | ○ |
| Inv. Ex.31 | X | 20 | 3.0±2 | 90±5 | 93±1 | ○ |
| Inv. Ex.32 | X | 18 | 3.0±2 | 90±5 | 93±1 | ○ |
| Inv. Ex.33 | X | 14 | 3.0±2 | 90±5 | 93±1 | ○ |
| Inv. Ex.34 | X | 20 | 3.0±2 | 90±5 | 93±1 | ○ |
| Inv. Ex.35 | X | 18 | 3.0±2 | 90±5 | 93±1 | ○ |
| Inv. Ex.36 | X | 14 | 3.0±2 | 90±5 | 93±1 | ○ |
| Inv. Ex.37 | X | 20 | 3.0±2 | 90±5 | 93±1 | ○ |
| Inv. Ex.38 | X | 18 | 3.0±2 | 90±5 | 93±1 | ○ |
| Inv. Ex.39 | X | 14 | 3.0±2 | 90±5 | 93±1 | ○ |
| Inv. Ex.40 | X | 17 | 3.0±2 | 90±5 | 93±1 | ○ |
| Inv. Ex.41 | X | 18 | 3.0±2 | 90±5 | 93±1 | ○ |
| Inv. Ex.42 | X | 19 | 3.0±2 | 90±5 | 93±1 | ○ |
| Comp. Ex. 1 | - | - | 6.0±2 | 60±5 | 92±1 | X |
| Comp. Ex. 2 | - | - | 6.0±2 | 60±5 | 92±1 | X |
| Comp. Ex. 3 | - | - | 5.0±2 | 60±5 | 92±1 | X |
| Comp. Ex. 4 | - | 11 | 6.0±2 | 70±5 | 92±1 | Δ |
| Comp. Ex. 5 | - | 8 | 5.0±2 | 70±5 | 92±1 | Δ |
| Comp. Ex. 6 | - | 6 | 5.0±2 | 70±5 | 92±1 | Δ |
| Comp. Ex. 7 | ○ | 19 | 3.0±2 | 115±5 | 91±1 | Δ |
| Comp. Ex. 8 | ○ | 17 | 3.0±2 | 115±5 | 91±1 | Δ |
| Comp. Ex. 9 | ○ | 13 | 3.0±2 | 115±5 | 91±1 | Δ |
| Comp. Ex. 10 | - | - | 6.0±2 | 60±5 | 92±1 | X |
| Comp. Ex. 11 | - | - | 6.0±2 | 60±5 | 92±1 | X |
| Comp. Ex. 12 | - | - | 5.0±2 | 60±5 | 92±1 | X |
| Comp. Ex. 13 | - | 11 | 6.0±2 | 70±5 | 92±1 | Δ |
| Comp. Ex. 14 | - | 8 | 5.0±2 | 70±5 | 92±1 | Δ |
| Comp. Ex. 15 | - | 6 | 5.0±2 | 70±5 | 92±1 | Δ |
| Comp. Ex. 16 | ○ | 19 | 3.0±2 | 115±5 | 91±1 | Δ |
| Comp. Ex. 17 | ○ | 17 | 3.0±2 | 115±5 | 91±1 | Δ |
| Comp. Ex. 18 | ○ | 13 | 3.0±2 | 115±5 | 91±1 | Δ |

As shown in Tables 1 and 3, in Inventive Examples 1 to 42, which satisfy all the manufacturing conditions proposed in the present disclosure, no residual elements (C, N, or O) were measured on the surface of the steel sheet. Specifically, (a) and (b) of FIG. 1 are photographs showing the results of EPMA surface analysis of Inventive Examples 10 and 16, representing the inventive examples. Referring to (a) and (b) of FIG. 1, it was confirmed that the area of the blue portion was formed very widely, and no residual elements were measured on the surface of the steel sheet. This was found to be because urea was vaporized by a decomposition reaction and did not remain on the surface of the steel sheet.

That is, it was found that in Inventive Examples 1 to 42, no residue of urea or alcohol was formed on the surface of the steel sheet even after cooling and drying. Accordingly, it could be expected that even if additional processing was performed on the steel sheet, secondary deterioration of physical properties would not occur.

In addition, in Inventive Examples 1 to 42, the temperature deviation of the surface was measured to be large, and it was found that the cooling rate of the molten coating layer was increased to promote the solidification of the surface of the steel sheet. Accordingly, the surface roughness, gloss, and whiteness of the steel sheet were also measured to be at appropriate levels, and it was found that the surface quality was excellent and the surface appearance was beautiful because no dot-shaped defects were formed.

On the other hand, in Comparative Examples 1 to 3 and Comparative Examples 10 to 12, in which only air was sprayed without the cooling composition, 10 or more dot-shaped defects were measured on the surface of the steel sheet, and it was found that the surface quality was very poor. This was found to be because solidification nuclei were not formed in the molten coating layer, and thus the surface solidification was not promoted.

In addition, in Comparative Examples 4 to 6 and Comparative Examples 13 to 15, in which only pure water was sprayed instead of the cooling composition, the temperature deviation of the surface was measured to be small, and it was found that the effect of increasing the cooling rate of the molten coating layer was insufficient and the effect of promoting the solidification of the surface of the steel sheet was also insufficient. Accordingly, 1 or more and less than 10 dot-shaped defects were measured on the surface of the steel sheet, and it was found that the surface quality was not good.

In addition, in Comparative Examples 7 to 9 and Comparative Examples 16 to 18, in which a phosphate aqueous solution was sprayed instead of the cooling composition, residual elements (P) were measured on the surface of the steel sheet. Specifically, (c) of FIG. 1 is a photograph showing the results of EPMA surface analysis of Comparative Example 7, representing the comparative examples. Referring to (c) of FIG. 1, it was confirmed that the area of the blue portion was formed very narrowly, and residual elements (P) were measured on the surface of the steel sheet.

That is, it was found that in Comparative Examples 7 to 9 and Comparative Examples 16 to 18, residues of phosphoric acid were formed on the surface of the steel sheet after cooling and drying. Accordingly, 1 or more and less than 10 dot-shaped defects were measured on the surface of the steel sheet, and it was found that the surface quality was not good. In addition, it could be expected that secondary deterioration of physical properties of the steel sheet would also occur.

### (4) Confirmation of Effect of Increasing Cooling Rate According to Type of Sprayed Substance

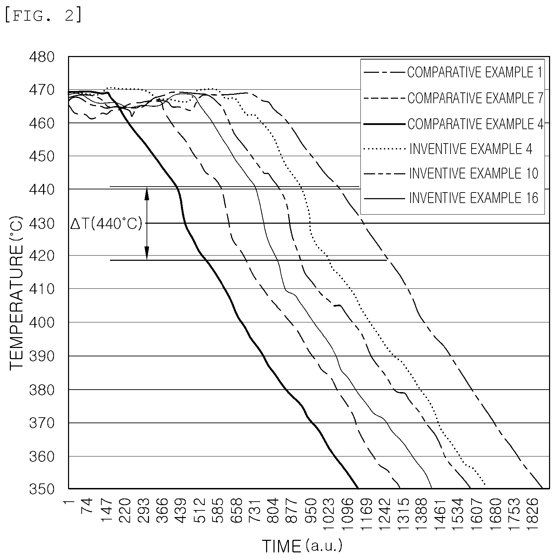

In order to confirm the effect of increasing the cooling rate for Inventive Example 4, Inventive Example 10, Inventive Example 16, Comparative Example 1, Comparative Example 4, and Comparative Example 7, a profile of the surface temperature of the steel sheet was performed. Specifically, for each steel sheet, the surface temperature of the steel sheet after being immersed in a plating bath and subjected to air wiping was measured, and the surface temperature of the steel sheet after spraying and passing through a pass roll was measured, and then a graph of the surface temperature over time was shown in FIG. 2.

Referring to FIG. 2, in the case of Comparative Example 1 and Comparative Example 4, the temperature deviation value of the steel sheet was measured to be very small, and it was found that the effect of increasing the cooling rate of the molten coating layer was insufficient, and thus the effect of promoting the solidification of the surface of the steel sheet was also insufficient.

In addition, in the case of Inventive Example 4, Inventive Example 10, Inventive Example 16, and Comparative Example 7, it was confirmed that the temperature deviation value of the steel sheet was measured to be a similar value. That is, it was found that the cooling composition including urea had an endothermic reactivity at a level almost similar to that of the conventional phosphate aqueous solution.

### (5) Confirmation of Effect of Increasing Cooling Rate According to Steel Sheet Temperature in Spraying Process

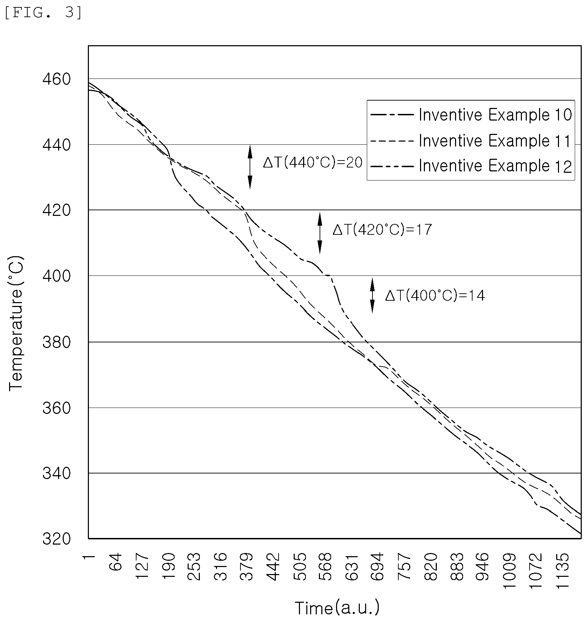

In order to confirm the effect of increasing the cooling rate for Inventive Examples 10 to 12, a profile of the surface temperature of the steel sheet was performed. Specifically, for each steel sheet, the surface temperature of the steel sheet after being immersed in a plating bath and subjected to air wiping was measured, and the surface temperature of the steel sheet after spraying and passing through a pass roll was measured, and then a graph of the surface temperature over time was shown in FIG. 3.

Referring to FIG. 3, it was confirmed that the temperature deviation value of the steel sheet of Inventive Example 10 was measured as the largest value, and the temperature deviation value of the steel sheet of Inventive Example 12 was measured as the smallest value. That is, it was found that the higher the surface temperature of the steel sheet when spraying the aqueous solution droplets, the more excellent the effect of increasing the cooling rate of the coating layer and the effect of promoting the solidification of the surface of the steel sheet.

The above-described embodiments are only examples, and the present disclosure is not limited thereto. Any one that has a configuration substantially the same as the technical idea described in the claims of the present disclosure and achieves the same operational effect is included in the technical scope of the present disclosure.

## Claims

1. A cooling composition for a zinc alloy-coated steel sheet, the composition comprising:
0.1 to 10.0% by weight of urea; and
a remainder of water.

2. The cooling composition for a zinc alloy-coated steel sheet of claim 1,
wherein the cooling composition further comprises 0.1 to 10.0% by weight of alcohol.

3. The cooling composition for a zinc alloy-coated steel sheet of claim 2,
wherein the alcohol comprises one or more selected from the group consisting of ethanol, propanol, isopropanol, butanol, and isobutanol.

4. A method for manufacturing a zinc alloy-coated steel sheet, the method comprising:
preparing a base steel sheet;
dipping the base steel sheet into a Zn-based plating bath containing Al and Mg to perform plating;
adjusting a coating weight of the base steel sheet; and
cooling the steel sheet, on which the coating weight has been adjusted, by spraying a cooling composition in droplets,
wherein the cooling composition comprises 0.1 to 10.0% by weight of urea and a remainder of water.

5. The method for manufacturing a zinc alloy-coated steel sheet of claim 4,
wherein the cooling composition further comprises 0.1 to 10.0% by weight of alcohol.

6. The method for manufacturing a zinc alloy-coated steel sheet of claim 5,
wherein the alcohol comprises one or more selected from the group consisting of ethanol, propanol, isopropanol, butanol, and isobutanol.

7. The method for manufacturing a zinc alloy-coated steel sheet of claim 4,
wherein, in the cooling, air is sprayed onto the steel sheet at a pressure of 1.0 to 5.0 kgf/cm².

8. The method for manufacturing a zinc alloy-coated steel sheet of claim 7,
wherein, in the cooling, the cooling composition is sprayed at a pressure of 0.5 to 2.5 kgf/cm².

9. The method for manufacturing a zinc alloy-coated steel sheet of claim 7,
wherein a spray pressure ratio of the cooling composition and the air is 1:0.3 to 0.9.

10. The method for manufacturing a zinc alloy-coated steel sheet of claim 4,
wherein, in the cooling, the cooling composition is sprayed onto the steel sheet after passing through a charging electrode.

11. The method for manufacturing a zinc alloy-coated steel sheet of claim 10,
wherein a voltage of -5 to -50 kV is applied to the cooling composition at the charging electrode.

12. The method for manufacturing a zinc alloy-coated steel sheet of claim 4,
wherein, in the cooling, a temperature of the steel sheet is 350 to 460°C.

13. The method for manufacturing a zinc alloy-coated steel sheet of claim 4,
wherein a temperature of the plating bath is 430 to 500°C.

14. A zinc alloy-coated steel sheet manufactured by the method according to any one of claims 4 to 13.
